# DEMANDE DE BREVET EUROPEEN

(11) **EP 2 890 135 A1**
(43) Date de publication de la demande: **01.07.2015**
(21) Numéro de dépôt: 14200499.3
(22) Date de dépôt: 29.12.2014
(51) Int. Cl.: H04N 21/2383, H04N 21/438, H04H 20/74, H04N 21/2389, H04N 21/61

(54) **Procédé de sécurisation d'une transmission DVB-S2**

(30) Priorité: 31.12.2013 FR 1303116
(71) Demandeur: Thales, 92200 Neuilly Sur Seine (FR)
(72) Inventeur: Gourlaouen, Katy, 92622 Gennevilliers Cedex (FR); Chiche, Lucie, 92622 Gennevilliers Cedex (FR); Touret, Marc, 92622 Gennevilliers Cedex (FR)
(74) Mandataire: Dudouit, Isabelle

(57) **Abrégé**

L'invention concerne un procédé de chiffrement d'une trame ou super trame DVB-S2 comportant au moins un premier type de trame modulée avec une première modulation M₁ et un deuxième type de trame modulée avec une deuxième modulation M₂, caractérisé en ce qu'il comporte au moins les étapes suivantes :
• insérer au sein de la super trame DVB-S2, un nombre de dummy trames « n » de structure DVB-S2 de longueur n afin d'obtenir une structure ST de même durée T définie, pour plusieurs configurations données, la taille de la dummy trame « n » est définie dans le champ 29 du mot de code du PLS d'une trame DVB-S2, une dummy trame « n » étant composée d'un PLHeader et de n-1 slots de 90 symboles complexes,
• appliquer un algorithme de chiffrement sur la super trame ainsi obtenue.

## Description

L'objet de l'invention concerne un procédé pour sécuriser les transmissions DVB-S2 (norme ETSI EN 302 307, disponible sur le site internet de l'ETSI), notamment en définissant un mode TRANSEC chiffrant la totalité des symboles DVB-S2, l'en tête « PLHeader » compris.

La norme DVB-S2 a été développée pour des applications civiles à très haut débit, par exemple pour la diffusion de la télévision. Une fois configurée, une porteuse DVB-S2 fonctionne avec un rythme symbole fixe, c'est-à-dire une bande passante fixe. La seule adaptation possible est de changer trame par trame le couple modulation et codage ou MODCOD, ce qui permet de résister à des changements de conditions de propagation ayant une dynamique de plus de 15 dB. Ce mode de codage et modulation adaptatif ou ACM (abréviation anglo-saxonne de Adaptive Coding & Modulation) est intrinsèque à la norme, mais nécessite un canal de retour pour informer l'émetteur DVB-S2 des conditions de propagation vues par le récepteur. D'une trame à l'autre le MODCOD peut être différent et donc l'efficacité spectrale aussi. Or, en DVB-S2, une trame transporte toujours 64800 bits et ceci indépendamment du couple MODCOD utilisé. Le tableau I ci-dessous indique pour les trames « normale » (FECFRAME de 64800 bits), le nombre de symboles suivant la modulation et la présence ou non de symbole pilote :

**Tableau I**

| | Sans Pilote | Avec Pilote |
|---|---|---|
| QPSK | 32490 | 33282 |
| 8 PSK | 21690 | 22194 |
| 16 APSK | 16290 | 16686 |

Il en résulte qu'une trame DVB-S2 n'a pas un nombre de symboles fixes et donc une durée fixe. Cette absence de synchronisme temporel empêche la mise en oeuvre de techniques efficaces de sécurisation de la transmission (TRANSEC), de la signalisation (NETSEC), ou de la communication (COMSEC). En effet, une trame S2 ne peut être chiffrée en fonction d'un marquant implicite tel que son numéro ou l'heure, à cause de sa structure apériodique. Le récepteur ne peut savoir :
- combien de trames S2 ont été envoyées et donc le numéro de trame courante, ou
- l'heure de la trame, heure utilisée en général pour initialiser les éléments de sécurisation ou chiffrage.

Par conséquent, les techniques de sécurisation des transmissions TRANSEC DVB-S2 nécessitent la transmission en clair du marquant de chiffrage et de l'en-tête ou header de la trame physique, ce qui conduit à une possibilité d'analyse du flux par un tiers non autorisé.

L'art antérieur connu du demandeur ne décrit pas comment chiffrer une trame DVB-S2 sur un mode synchrone. Différents systèmes existent pour chiffrer uniquement une partie de la trame. L'en-tête ou header de la trame physique est alors passé en clair et parfois avec le marquant horaire. Il existe aussi une option TRANSEC pour le DVB-S2, toutefois, ce TRANSEC n'est en réalité qu'un COMSEC car il ne protège pas contre l'interception, ni contre le brouillage.

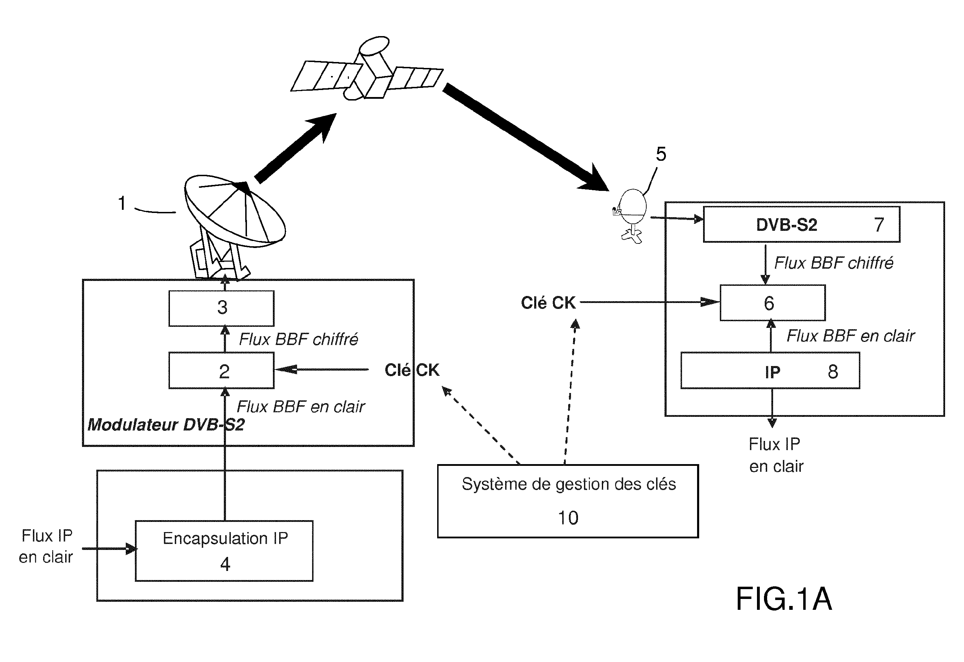

La figure 1A représente un exemple de système selon l'art antérieur pour le chiffrement d'une trame DVB-S2. Le système comprend un premier dispositif 1 comprenant un module de chiffrement 2 au niveau du modulateur DVB-S2, 3, ou disposé devant, qui va utiliser une clé K qui est générée par un système de gestion des clés 10, pour sécuriser le contenu des informations à transmettre, par exemple un flux Internet IP mis en forme par un mode « d'encapsulation », 4, par exemple un mode GSE (abrégé anglo-saxon de Generic Stream Ecapsulation) connu de l'homme du métier et pour le rendre non visible. Le dispositif de réception 5 comprend un module de déchiffrement 6 localisé au niveau du démodulateur DVB-S2, 7, qui utilise la même clé ou un dérivé de la clé K, pour transformer le contenu chiffré et permettre sa lecture après, par exemple, avoir désencapsulé, 8, les données. La génération de clés K est effectuée par exemple, en utilisant un générateur de clés, et les clés sont communiquées au module de déchiffrement 6 et/ou au module de chiffrement 2 via le système de gestion de clés 10. Le déchiffreur est autorisé à recevoir le contenu des informations uniquement s'il reçoit la clé utilisée. Le chiffrement est appliqué sur le champ de données de la trame BB (cf. BBFRAME définie dans la norme précitée EN 302 307). Le chiffrement est appliqué uniquement sur le champ de données de la trame BB car en général l'en-tête BBHeader contient des informations de signalisation relatives à l'algorithme de chiffrement (numéro de clé par exemple). Par conséquent, les techniques de TRANSEC nécessitent la transmission en clair des en-têtes de trame BB (BBFRAME) et aussi celui de la trame physique (PLHEADER).

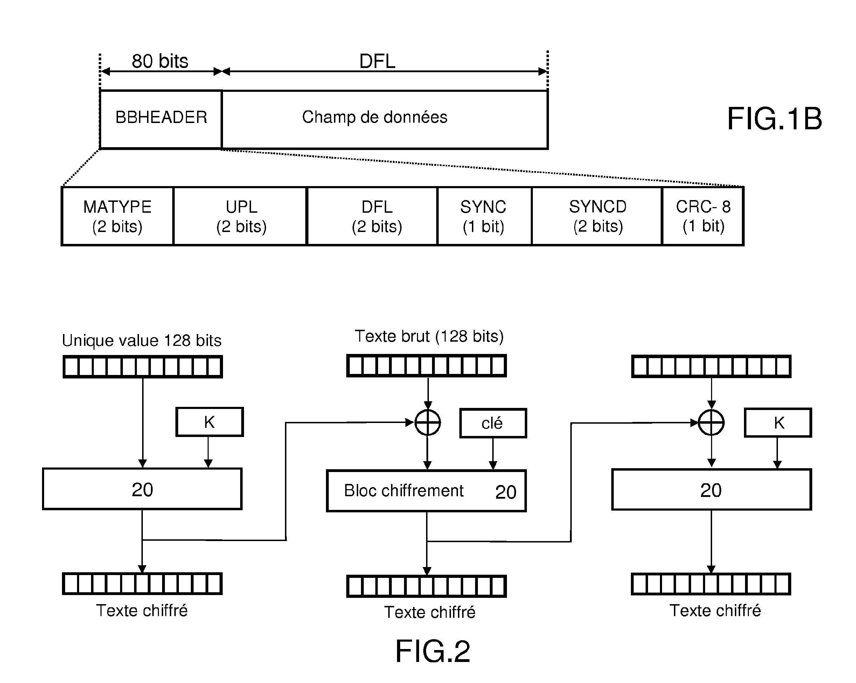

La figure 1B représente une trame DVB-S2 comprenant un BBheader sur 80 bits suivi d'un champ de données.

La figure 2 donne un exemple de technique de chiffrement par bloc connu de l'art antérieur. Le champ de données dans la trame BB sera chiffré en utilisant un mode de chiffrement AES-CBC (abrégé anglo-saxon de Advanced-Encryption-Standard-Cipher-Block-Chaining) comme illustré, avec un chiffrement de texte à la volée ou cyphertext sealing (CBC-CS). Le premier bloc de données à entrer dans l'algorithme de chiffrement 2 est composé des 128 premiers bits du champ de données.

La plupart des systèmes décrits dans l'art antérieur, présente un faible niveau de sécurité, avec une analyse du trafic possible par la lecture des en-têtes ou headers transmis en clair, un brouillage plus facile du fait de la connaissance de la position temporelle du header. Il suffit en effet de brouiller cette partie pour que le reste du signal ne soit pas exploitable.

Il existe donc un besoin de disposer d'un procédé permettant de sécuriser la totalité de la trame DVB-S2, en-têtes (PLHEADER et BBHEADER) et données incluses, afin d'éviter les problèmes de faible sécurité rencontrés dans les systèmes de l'art antérieur.

Dans la suite de la description, les définitions suivantes seront utilisées:
- une Super-trame ST est constituée de plusieurs trames DVB-S2 pour une configuration, les trames pouvant être modulées avec des modulations différentes,
- une dummy trame « n » est une extension de la dummy trame DVB-S2 définie section 5.5.1 du document précité EN 302 307. Cela désigne une trame muette, utilisée lorsqu'il n'y a pas de données à transmettre ou pour compléter temporellement des super-trames DVB-S2. Une dummy trame « n » est composée d'un PLHEADER (cf. 5.5.2 EN 302 307) adapté pour la synchronisation et la signalisation de la couche physique PLS et de n-1 slots de 90 symboles complexes (I = (1/√2), Q = (1/√2)),
- la dummy trame « 37 » est identique à la dummy trame définie section 5.5.1 du document EN 302 307,
- l'insertion d'une dummy trame « n » et d'une dummy trame « p » est équivalent en nombre de symboles à l'insertion d'une dummy trame « n + p»,
- le mot « slot » définit un ensemble de 90 symboles,
- PSK correspond à une modulation par changement de phase, QPSK à une modulation avec quatre valeurs de phase possibles (ou quadrature phase shift keying).

Un des objectifs de la présente invention est de proposer un procédé permettant de construire une super-trame DVB-S2 de durée fixe afin de pouvoir définir un mode TRANSEC adapté à chiffrer la totalité des symboles DVB-S2, l'en-tête ou PLheader compris. La définition d'une nouvelle structure temporelle doit notamment répondre à l'exigence suivante: la structure des trames DVB-S2 ne doit pas être modifiée, de façon à avoir un impact minimal sur la norme, et par conséquent sur les briques technologiques existantes DVB-S2.

Si l'on veut définir une structure périodique pour une porteuse DVB-S2 et mettre en oeuvre du TRANSEC sur l'ensemble des symboles de la trame au niveau de la couche physique PLFrame (Physical Layer Frame), il faut définir une structure admettant tous les types de trames DVB-S2.

L'invention concerne un procédé de chiffrement d'une trame ou super trame DVB-S2 comportant au moins un premier type de trame modulée avec une première modulation M₁ et un deuxième type de trame modulée avec une deuxième modulation M₂, caractérisé en ce qu'il comporte au moins les étapes suivantes :
- insérer au sein de la super trame DVB-S2, un nombre de dummy trames « n » de structure DVB-S2 de longueur n afin d'obtenir une structure ST de même durée T définie, pour plusieurs configurations données, la taille de la dummy trame « n » est définie dans le champ 29 du mot de code du PLS d'une trame DVB-S2, une dummy trame « n » étant composée d'un PLHeader et de n-1 slots de 90 symboles complexes,
- appliquer un algorithme de chiffrement sur la super trame ainsi obtenue.

Selon une variante de réalisation une super trame ST comporte un nombre a de trames modulées avec une première modulation M₁, b trames modulées avec une deuxième modulation M₂, c trames modulées avec une kième modulation Mₖ, et on introduit x dummy trames « n » de longueur n pour les trames de modulation M₁, y dummy trames « p » de longueur p pour les trames de modulation M₂, z dummy trames « q » de longueur q pour les trames de modulation Mₖ, afin d'obtenir une longueur de super trame T donnée quelque soit les modulations utilisées pour plusieurs configurations.

Une super-trame est, par exemple, constituée de a trames QPSK et de b trames 8PSK et on introduit un nombre x de dummy trames « n » de longueur n et un nombre y de dummy trames « n+1 » de longueur n+1 afin que la longueur de la super trame ST corresponde à une longueur ou durée temporelle T donnée.

Dans le cas où la super-trame est constituée de 10 trames QPSK avec pilotes et de 15 trames 8PSK avec pilotes, on introduit une dummy trame « 1 » de longueur 1 slot pour la trame QPSK.

Selon une variante, il est possible de répartir les dummy trames « n » de manière régulière dans la super trame.

Selon une autre variante, on introduit une seule dummy trame « n » en fin de la super trame, selon le principe mentionné précédemment « n »+« p »=« n+p ».

Selon une variante de réalisation, on détermine un type de dummy trames « n » à introduire selon le type de trames, trame avec pilote ou trame sans pilote.

On peut modifier la signalisation PLS comprenant les caractéristiques modulation, codage et type, d'une trame pour indiquer la taille « n » d'une dummy trame « n » et l'on définit un type 00 (dummy trame « 1 ») correspondant à un slot pour aligner les trames sans pilote, un type 01 (dummy trame « 2 ») à deux slots, un type 10 (dummy trame « 9 ») de 9 slots et un type 11 (dummy trame « 10 ») de 10 slots pour aligner les types de trames avec pilote.

On introduit, par exemple, une dummy trame « n » en début de la super-trame ST afin de faciliter la synchronisation.

Selon une mise en oeuvre du procédé, on construit des super-trames ST ayant une durée de quelques centaines de ms, 250 ms.

D'autres caractéristiques et avantages du dispositif selon l'invention apparaîtront mieux à la lecture de la description qui suit d'exemples de réalisation donnés à titre illustratif et nullement limitatif, annexée des figures qui représentent :
- La figure 1A et la figure 1B, une solution pour sécuriser les transmissions selon l'art antérieur,
- La figure 2, un autre exemple de chiffrement avec le mode AES,
- La figure 3, un schéma de mise en oeuvre du procédé selon l'invention,
- La figure 4, un exemple de configuration pour des super trames multi-ACM, et
- La figure 5, un rappel des valeurs possibles du PLS (Physical Layer Signalling) de la norme DVB-S2.

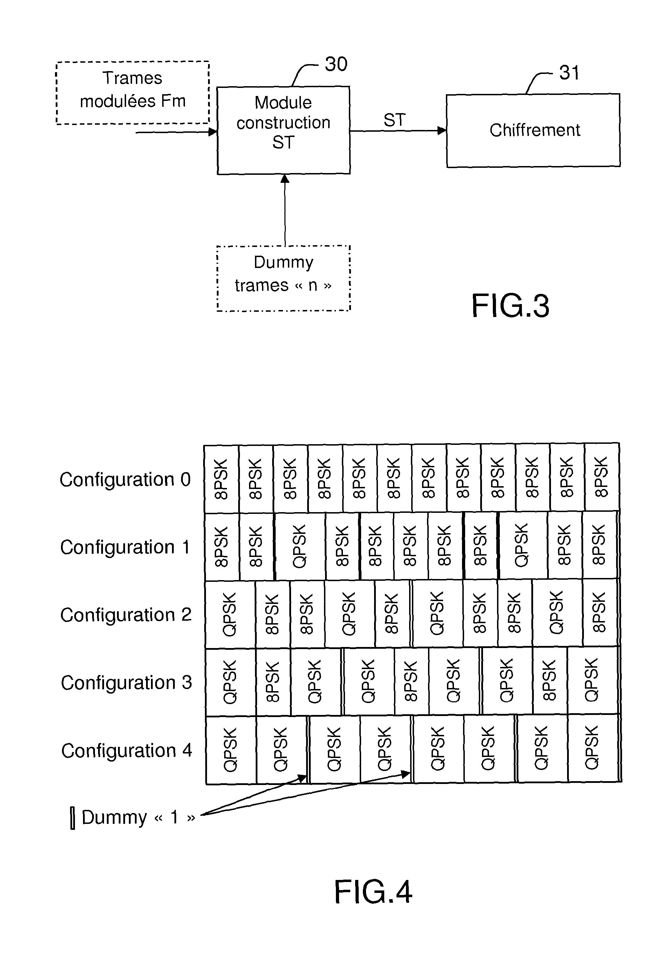

La figure 3 schématise un exemple de système permettant la mise en oeuvre du procédé selon l'invention. Le système comporte un module 30 de définition ou construction d'une super-trame ST recevant les trames DVB-S2 modulées à une fréquence Fm. Le module 30 de définition et construction est adapté à définir la taille n de la dummy trame « n » à ajouter pour obtenir une super trame ST de durée fixe en exécutant les étapes du procédé détaillées ci-après, un module de chiffrement 31 recevant les super trames ainsi générées.

Pour pouvoir définir un TRANSEC DVB-S2, le procédé détermine une structure temporelle appelée super-trame ST qui présente une durée temporelle T fixe pour plusieurs configurations et pour une bande B du système. La super trame définie va respecter la structure d'une trame DVB-S2. Sa durée T_{ST} est par exemple de l'ordre de quelques millisecondes, inférieure à 500 ms, par exemple, afin de permettre une synchronisation rapide, et sa durée sera aussi choisie en fonction des mécanismes de modulation ACM. Les mécanismes ACM doivent en effet pouvoir s'appliquer à un rythme plus rapide que la super-trame. La super-trame est constituée de plusieurs trames DVB-S2 pour une configuration donnée, une trame DVB-S2 est modulée avec une modulation donnée, par exemple, QPSK ou 8 PSK.

Les trames DVB-S2 « normale » ne sont pas de même longueur suivant le type de modulation :
- une trame QPSK est faite de 361 slots de 90 symboles,
- une trame 8 PSK est faite de 241 slots de 90 symboles (même vitesse symbole qu'en QPSK car la bande est fixe).

Les nombres 361 et 241 étant premier entre eux, l'alignement temporel des trames sera réalisé en utilisant des dummy trame « n » comme il va être explicité ci-après.

Dans la norme DVB-S2, les dummy trames (dummy trame « 37 » de la présente invention) ne servent pas véritablement si ce n'est à émettre du bourrage. Le procédé va se servir des dummy trames existantes dans la norme, en modifiant leur longueur, la nouvelle longueur sera indiquée dans l'entête PLHeader. Le terminal récepteur n'aura pas besoin de connaître à l'avance la taille n des dummy trame « n » car cette information, en l'occurrence « n » sera indiquée dans le PLHeader.

Le procédé va procéder, par exemple, de la manière suivante. Soit T la durée temporelle qu'une super trame ST doit respecter, une super trame étant définie pour une bande B du système. Soit a le nombre de trames modulées avec la modulation QPSK et b le nombre de trames modulées avec la modulation 8 PSK, par exemple, le procédé va introduire de manière régulière, par exemple, plusieurs dummy trames « 1 » afin que la super trame ST conserve toujours la même longueur pour toutes les configurations souhaitées (configurations de modulation). Il est aussi possible d'insérer les dummy trame « 1 » en fin de la super trame.

Le tableau II qui suit donne un exemple de configurations pour des super-trames multi-ACM QPSK/8PSK. Selon la mise en oeuvre du procédé, on combine au sein d'une même super-trame ST, des trames ayant des modulations différentes, afin d'avoir un multi-ACM optimal.

**Tableau II**

| **Configuration multi-ACM** | | 0 | 1 | 2 | 3 | 4 |
|---|---|---|---|---|---|---|
| **QPSK** | Nb Trame | 0 | 2 | 4 | 6 | 8 |
| **8PSK** | Nb Trame | 12 | 9 | 6 | 3 | 0 |
| dummy trame « n » | « **n** » Nb Slots (dont header) | 0 | 1 | 2 | 3 | 4 |
| Nb Symboles | | **260280** | | | | |

Pour chaque configuration, il est possible de constituer la structure des ST en répartissant de manière uniforme les trames de même modulation afin de limiter la gigue comme il est illustré à la figure 4. La taille n de la dummy trame « n » utilisée pour compléter temporellement une ST, dans cet exemple, est toujours la même, une trame « dummy » d'un seul slot réduit au PLHeader. Cette trame dummy « 1 » est répétée en fonction des configurations ACM. Le résultat est un alignement temporel des super trames pour toutes les configurations multi-ACM de 0 à 4.

Le procédé repose sur la possibilité de transmettre autant de dummy slots que le requiert la structure de ST. Une utilisation étendue de la signalisation PLS incluse dans le PLHeader de la trame DVB-S2 permettrait d'indiquer au récepteur la taille n de la dummy trame « n » courante.

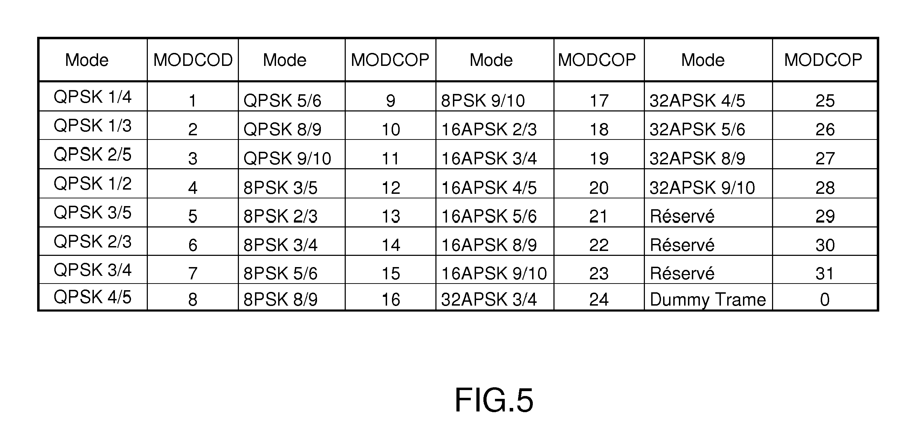

La figure 5 est un rappel de la signalisation PLS. Le PLS est composé de deux champs :
- MODCOD (5 bits) qui identifie la modulation et le taux de code de la trame,
- TYPE (2 bits) qui identifie le type de trame (normale/courte) et la présence/absence de symboles pilotes, champ non significatif pour
une « dummy » trame DVB-S2 définie dans le document EN 302 307. Le champ MODCOD a trois valeurs réservées ainsi qu'une quatrième pour indiquer que la trame est une « dummy » classique (dummy trame « 37 » de la présente invention). Ces trois valeurs combinées avec le champ TYPE permettent de définir 12 tailles de dummy trame « n » en plus de la « dummy » trame classique.
Selon l'art antérieur, un récepteur DVB-S2 peut décoder n'importe quelle porteuse DVB-S2, sans connaître a priori, la modulation et le codage de la porteuse, puisque chaque trame indique via le PLS ses caractéristiques (MODCOD, TYPE). Le procédé selon l'invention va conserver cette propriété.

Le tableau III suivant donne un exemple pour modifier le champ PLS selon les étapes du procédé.

**Tableau III**

| Mode | MODCOD | TYPE | **« n »** Nb Slots (dont header) | |
|---|---|---|---|---|
| dummy trame « n » | 29 | 00 | 1 | Pour aligner les trames sans pilote |
| | | 01 | 2 | |
| | | 10 | 9 | Pour aligner les trames avec pilote |
| | | 11 | 10 | |
| Dummy « classique » | 0 | - | 37 | |

Dans cet exemple, on définit quatre types de dummy trames « n » dans le champ 29 de MODCOD. Les types 00 et 01 seront utilisés pour aligner des trames sans pilote. Dans cet exemple, TYPE 00 correspond à un slot (PLHEADER seul), TYPE 01 à 2 slots y compris le slot du header dans le cas de trames sans pilote. Les types 10 et 11 sont réservés aux trames avec pilote. TYPE 10 correspond à ajouter 9 slots et TYPE 11 à ajouter 10 slots pour aligner des trames avec pilote.

Le tableau IV suivant donne un exemple de type de « dummy » trame qu'il faut pour compléter des supers trames composées de trames de même modulation dans un système qui ne nécessite que des trames sans pilote, typiquement un système fixe avec des équipements dont le bruit de phase est faible. L'exemple est donné pour une super trame dont la modulation est au mieux la modulation 16 APSK.

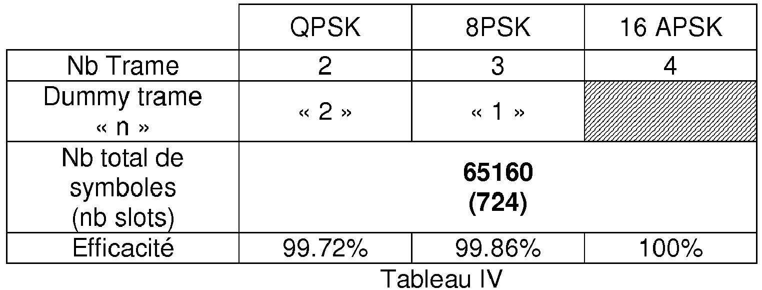

Pour la modulation 16 APSK, on n'introduit pas de dummy trame dans la super trame, pour la modulation 8PSK, on va introduire des dummy trames « 1 », pour la modulation QPSK, on introduit des dummy trames « 2 ». En généralisant, il est possible d'écrire pour une valeur n prédéterminée, que l'on introduit des dummy trames de longueur n, n+1, n+2 avec n=0 respectivement pour la modulation 16 APSK, 8PSK, QPSK.

Avec des systèmes en ACM, les symboles « pilotes » peuvent être insérés dans la structure de trame de couche physique pour faciliter la synchronisation et aussi à des fins d'estimation de canal. Au niveau démodulateur, avec le bruit de phase spécifié, la récupération de phase apparaît très difficile sans pilote pour les modulations 8 PSK et aux ordres plus élevés. Par ailleurs, dans le système ACM, un récepteur est en général capable de décoder une partie seulement de la totalité du flux, et plus précisément seules les trames émises dont les MODCO sont compatibles avec les conditions du canal utilisateur. Dans ce contexte, les symboles pilotes permettent aussi la récupération de porteuse sans connaissance de données de trame, même dans les cas où certains PLHeaders ne sont pas correctement décodés, car les pilotes sont régulièrement espacés.

Le principe exposé ci-dessus s'applique pour les trames avec pilote. Cependant le nombre de symboles pilotes par trame n'est pas un multiple de 90 :
- 22 blocs de 36 symboles en QPSK,
- 14 blocs de 36 symboles en 8PSK,
- 11 blocs de 36 symboles en 16ASPK.

Pour avoir un multiple de 90 symboles par super-trame, il faut au minimum 5 trames avec pilote (5*36=2*90=...).

En appliquant les règles données pour un système qui ne nécessite que des trames avec pilote, on en déduit la taille n de la dummy trame « n » qu'il faut pour compléter les super trames.

Le tableau V suivant donne un exemple de type de « dummy » trames que l'on va utiliser pour compléter la super trame.

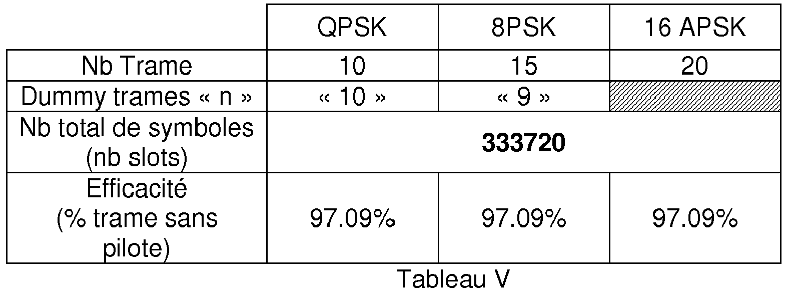

Une ST avec pilote nécessite donc plus de symboles qu'une ST sans pilote. Afin de ne pas impacter la fonctionnalité ACM inhérent au DVB-S2, il est préférable d'avoir une ST de l'ordre de quelques 100ms (typiquement 250ms).

Pour une ST avec pilote de 250ms cela impose un débit minimum de 1.33Mbauds.

Pour des applications de mobilité, les modulations 16 APSK ne seront pas utilisées. La structure de la ST peut donc être optimisée en diminuant la taille des trames « dummy » de compléments comme il est indiqué dans le tableau VI ci-dessous :

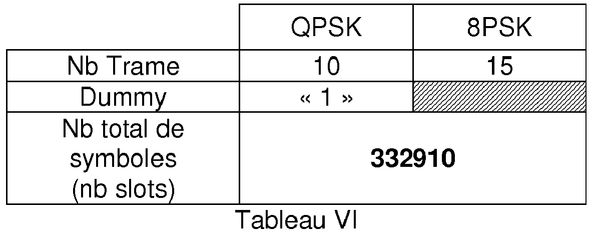

L'introduction de dummy trame « n » de taille variable n permet de structurer une porteuse DVB-S2 en super-trame de durée fixe et ainsi d'implémenter un TRANSEC avec marquant implicite basée sur l'heure ou le numéro de la ST par exemple.

Le procédé selon l'invention augmente notamment la sécurité des transmissions, la résistance à l'interception. Il permet un alignement temporel d'une super-trame ST2 et rend possible un horodatage de la structure DVB-2 et par conséquent la définition implicite d'un vecteur initial de chiffrement. Les dummy trames « n » modifiées n'ont pas d'impact sur le standard DVB-S2. L'invention permet de chiffrer la totalité d'une trame DVB-S2.

## Revendications

1. Procédé de chiffrement d'une trame ou super trame DVB-S2 comportant au moins un premier type de trame modulée avec une première modulation M₁ et un deuxième type de trame modulée avec une deuxième modulation M₂, **caractérisé en ce qu'**il comporte au moins les étapes suivantes :
• insérer au sein de la super trame DVB-S2, un nombre de dummy trames « n » de structure DVB-S2 de longueur n afin d'obtenir une structure ST de même durée T définie, pour plusieurs configurations données, la taille de la dummy trame « n » est définie dans le champ 29 du mot de code du PLS d'une trame DVB-S2, une dummy trame « n » étant composée d'un PLHeader et de n-1 slots de 90 symboles complexes,
• appliquer un algorithme de chiffrement sur la super trame ainsi obtenue.

2. Procédé selon la revendication 1 **caractérisé en ce que** la super trame comporte, a trames modulées avec une première modulation M₁, b trames modulées avec une deuxième modulation M₂, c trames modulées avec une kième modulation Mₖ, et **en ce que** l'on introduit x dummy trames « n » de longueur n pour les trames de modulation M₁, y dummy trames « p » de longueur p pour les trames de modulation M₂, z dummy trames « q » de longueur q pour les trames de modulation Mₖ, afin d'obtenir une longueur de super trame T donnée quelque soit les modulations utilisées pour plusieurs configurations

3. Procédé selon la revendication 1 **caractérisé en ce que** la super trame est constituée de a trames QPSK et de b trames 8PSK et **en ce que** l'on introduit un nombre x de dummy trames « n » de longueur n et un nombre y de dummy trames « n+1 » de longueur n+1 afin que la longueur de la super trame ST corresponde à une longueur ou durée temporelle T donnée.

4. Procédé selon la revendication 3 **caractérisé en ce que** pour une supertrame constituée de 10 trames QPSK avec pilotes et de 15 trames 8PSK avec pilotes, on introduit une dummy trame « 1 » de longueur 1 slot pour la trame QPSK.

5. Procédé selon l'une des revendications précédentes **caractérisé en ce que** l'on répartit les dummy trames « n » de manière régulière dans la super trame.

6. Procédé selon l'une des revendications précédentes **caractérisé en ce que** l'on introduit une seule dummy trame « n » en fin de super trame.

7. Procédé selon l'une des revendications précédentes **caractérisé en ce que** l'on détermine le type de dummy trames « n » à introduire selon le type de trames, trame avec pilote ou trame sans pilote.

8. Procédé selon la revendication 3 **caractérisé en ce que** l'on modifie la signalisation PLS comprenant les caractéristiques modulation, codage et type, d'une trame pour indiquer la taille « n » d'une dummy trame « n » et l'on définit un type 00 (dummy trame « 1 ») correspondant à un slot pour aligner les trames sans pilote, un type 01 (dummy trame « 2 ») à deux slots, un type 10 (dummy trame « 9 ») de 9 slots et un type 11 (dummy trame « 10 ») de 10 slots pour aligner les types de trames avec pilote.

9. Procédé selon l'une des revendications précédentes **caractérisé en ce que** l'on introduit une dummy trame « n » en début de la super-trame ST afin de faciliter la synchronisation.

10. Procédé selon l'une des revendications précédentes **caractérisé en ce que** l'on construit des super-trames ST ayant une durée de quelques centaines de ms, 250 ms.
